# EUROPEAN PATENT SPECIFICATION

(11) **EP 2 664 945 B1**
(45) Date of publication and mention of the grant of the patent: **08.07.2015**
(21) Application number: 12382178.7
(22) Date of filing: 15.05.2012
(51) Int. Cl.: F42B 12/36, G01V 1/18, G01V 1/16

(54) **Unattended ground sensors**
Unbeaufsichtigte Bodensensoren
Capteurs au sol automatiques

(43) Date of publication of application: 20.11.2013
(73) Proprietor: The Boeing Company, Chicago, IL 60606-2016 (US)
(72) Inventor: Scarlatti, David, Madrid 28028 (ES); Esteban-Campillo, David, Madrid (ES); Garcia, Javier, Madrid 28020 (ES)
(74) Representative: Boult Wade Tennant

(56) References cited:
- EP-A1- 2 372 402
- WO-A2-01/78025
- WO-A2-2005/072286
- FR-A1- 2 900 469
- GB-A- 2 450 789
- US-A1- 2004 066 451
- US-A1- 2009 218 439

## Description

### FIELD OF THE INVENTION

The present invention relates to air-deployable unattended ground sensors that, once deployed, may be used to detect movement of a pedestrian or vehicle in a monitored area using seismic sensors.

### BACKGROUND TO THE INVENTION

Networks of unattended ground sensors have been developed to make use of wireless sensor networks for surveillance applications. For example, networks of unattended ground sensors may be used in wooded zones where surveillance using radar systems is not viable.

A network typically comprises battery-powered devices that use various sensors to monitor physical or environmental properties, such as temperature, seismic waves or magnetic fields. In this way, the ground sensors may detect movement of pedestrians and vehicles. The ground sensors send data over the wireless network to a base station that processes the data provided by each ground sensor.

Typically, unattended ground sensors are sophisticated, intelligent devices. Each sensor will process data it receives to identify events corresponding to the passage of a pedestrian or vehicle and possibly even discriminating between types of events (e.g. pedestrian, light vehicle, heavy vehicle, etc) and/or determining a position of the pedestrian or vehicle. Consequently, each ground sensor is relatively expensive. In addition, the size of the ground sensors is relatively large and they are designed for long endurance in semi-permanent deployment. Thus, generally much effort is required to plan the deployment.

There is a need for a relatively simple unattended ground sensor that may be conveniently deployed from the air.

US 2009/0218439 is directed to a method for emplacing sensors, comprising the steps of modifying an existing sensor to attach an autorotational mechanism and deploying said sensor by autorotational means.

### SUMMARY OF THE INVENTION

The present invention is directed to an air-deployable unattended ground sensor as in claim 1, a network of said unattended ground sensors as in claim 9, and a method of deploying said ground sensors as in claim 10.

Against this background, and from a first aspect, the present invention resides in an air-deployable unattended ground sensor comprising a seismic sensor, a transmitter, a controller, a power supply and a rotor.

The seismic sensor is operable to detect seismic waves incident on the ground sensor and to generate seismic data therefrom. For example, the seismic sensor may provide an electrical signal with a quantity, such as voltage or current, that varies according to the strength of the seismic waves detected. The variation of the electrical signal will provide the data that corresponds to the detected seismic waves. The seismic sensor may be a geophone or may be a MEMS (micro-electromechanical system) seismic sensor. Optionally, the seismic sensor may be a multi-axis sensor, for example to be sensitive to seismic vibrations arriving from any direction. This is advantageous where the orientation of the seismic sensor once deployed is not guaranteed.

The controller is operable to receive signals from the seismic sensor corresponding to the seismic data. The signals may be received directly from the seismic sensor or they may be received indirectly. For example, the ground sensor may further comprise an analogue to digital converter to digitise the seismic data provided by the seismic sensor. One or more amplifiers may be provided to amplify the signal, and one or more filters may be provided to condition the signal provided by the seismic sensor. For example, a bandpass filter may be provided such that only frequencies known to contain data indicative of a passing pedestrian or vehicle are provided to the controller. In this way, noise or events caused by small animals passing nearby may be filtered out. Other forms of commonly employed signal conditioning will be apparent to those skilled in the art.

The controller may process the signal it receives that corresponds to the seismic data. For example, any of the signal conditioning steps like filtering and amplifying that were described above may be performed by the controller. The controller is operable to send signals to the transmitter for onward transmission. The signals include the signals that correspond to the seismic data, or are derived therefrom (e.g. after signal conditioning such as noise suppression). The signals may be passed directly or indirectly to the transmitter.

The transmitter is operable to transmit signals from the ground sensor wirelessly, including signals that are derived from the seismic data. The wireless transmission may use electromagnetic radiation. The transmitter may transmit at radio frequencies, although other methods are possible such as microwave transmission. The transmission may be directional, for example towards the known location of a base station. The transmitter may include components for converting the signals provided by the controller into a form suitable for driving an antenna.

A power supply is arranged to provide power to the ground sensor. The power supply will provide power to at least the controller, and may also provide power to the transmitter and the seismic sensor. The power supply may be switched, such that it activates upon deployment. An example is provided below.

To allow air deployment, the ground sensor is provided with a rotor. The rotor may rotate as the ground sensor falls to the ground to slow the rate of descent of the ground sensor. In this way, it is possible to deploy the ground sensor from the air, that is to deploy the ground sensor from an aircraft such that the ground sensor does not freefall to the ground, but instead descends to the ground in a controlled fashion. Thus, the ground sensor's impact with the ground is much reduced, meaning that the design of the ground sensor need not be so robust. Thus, a device having a relatively delicate component in a seismic sensor, such as a MEMS sensor, may be deployed from an aircraft without the ground sensor breaking when it hits the ground.

Moreover, the present invention provides a small, simple and inexpensive ground sensor that may be used in a network of such sensors. The simplified design of the sensors allows rapid deployment from the air, and subsequent collection and redeployment.

The rotor is arranged to freewheel. By freewheel, it is meant that the rotor is not prevented from rotating: rather, the rotor is allowed to rotate either freely or with a braking resistance to control the rotation speed. For example, the ground sensor may comprise a braking mechanism to slow rotation of the rotor. The braking mechanism may be a gear mechanism coupled to the rotor. The gear mechanism may provide resistance and limit the rotation speed of the rotor. This in turn limits the rate of descent of the ground sensor. Thus, the rotor may be arranged to freewheel as the ground sensor descends to the ground. The freewheeling rotor will slow the rate of descent of the ground sensor in a manner akin to powerless autorotation landings in helicopters.

The blades may have an aerodynamic shape optimised for freewheeling. In addition, the ground sensor further comprises a switch that is arranged to be activated by rotation of the rotor. Upon activation, the switch switches on the power supply, for example by completing an electrical circuit to the powered components. The switch may be activated upon the rotation of the rotor increasing to reach a threshold value, for example a value reached when the ground sensor is deployed but not by any accidental movement of the rotor prior to deployment. Hence, the switch may be arranged to be activated by rotation of the rotor above a threshold rate of rotation.

The outer body of the ground sensor may be shaped to make deployment as easy as possible. For example, the outer body may be shaped such that the ground sensor will tend to penetrate into the ground when it hits the ground. In this respect, the ground sensor may be provided with an elongate outer body that is longer than it is wide. The rotor may be provided at one end of the elongate outer body. The seismic sensor, the controller and the power supply may be housed within the elongate outer body. The transmitter may also be housed within the elongate outer body as this also helps protect the transmitter during deployment. The seismic sensor, the controller, the power supply, the transmitter (when present within the outer body) and any other components may be stacked one above the other, thus allowing a narrower, longer outer body. Preferably, the transmitter is located at the top of the stack, e.g. at the top of the outer body. Preferably, the seismic sensor is located at the bottom of the stack.

The outer body may be provided with a narrowing base to help the ground sensor drive itself into the ground when it lands. The narrowing base may be provided at the end remote from the rotor. The elongate outer body may have a shape that tapers to an end. The rotor may be provided at one end of the elongate body and the elongate body may taper at the other end. The elongate outer body may taper at its end to a point. The end may take the form of a spike. Ribs may extend towards a point at the base of the ground sensor. This may strengthen the outer body better to withstand the impact of hitting the ground. For example, four ribs may extend around the ground sensor. Preferably the ribs are narrow to ease penetration into the ground. The ribs may extend from a base of a main body section of the outer body. This base may itself taper to a point. Thus, the ribs first penetrate the ground, and then the sloping surface of the base of the main section will push into the ground. Preferably, the main section of the body has a constant cross section. This cross section may be circular, such that the main section is cylindrical, and the base may be conical.

With this design, penetration of the ground sensors into the ground is aided. To ensure the ground sensor is not inserted into the ground too far, the elongate body may be provided with a collar at an end of ground sensor remote from base. The collar presents a widened portion, preferably with a flat underside. Thus the collar will provide a stop that prevents the ground sensor penetrating too far into the ground. The transmitter may be positioned at the top of the ground sensor adjacent to the collar such that the transmitter is located above ground, provided with a suitable field of view for transmission (e.g. such that the transmission may radiate across the ground rather than be directed mostly upwards).

The outer body should be robust enough to withstand the impact with the ground sensor into the ground, particularly bearing in mind the different firmness of the ground likely to be encountered.

Preferably, the ground sensor has a top that is spaced from the collar so as to form an air gap to admit air into interior of elongate outer body. This allows for ventilation and cooling of the components within the ground sensor. The top may be supported above the collar by supports equally spaced around the collar. The height of the ground sensor from the collar upwards, i.e. the portion of the ground sensor exposed above ground when deployed, may have a low profile thereby increasing covertness. For example, this height may be made to be less than 40 mm, preferably less than 30 mm, with a height of 20 mm being particularly preferred.

Overall, the height of the ground sensor is preferably less than 200 mm, more preferably less than 100 mm and most preferably 90 mm. The height of the tapering end is preferably less than 100 mm, more preferably less than 50 mm, more preferably 30 mm or less, and most preferably 25 mm. The height of the main section of the outer body with constant cross section is preferably less than 100 mm, more preferably less than 80 mm and most preferably 60 mm. The width of the ground sensor at the collar is preferably less than 100 mm, more preferably less than 75 mm, most preferably less than 50 mm or 40 mm. The width of the constant cross section of the outer body is preferably less than 50 mm, more preferably 35 mm or less and most preferably 35 mm. The diameter of the rotor is preferably less than 200 mm, more preferably less than 150 mm and preferably 100 mm.

As is described more fully below, it is preferred that relatively dense networks are formed from simple, cheap unattended ground sensors. Consequently, each ground sensor need not have a large detection range, i.e. the area within which the passage of a pedestrian or vehicle may be detected. Seismic sensors having a sensitivity in the range of 10 to 20 V/m/s are preferred, the range 12 to 18 V/m/s being further preferred, and the range 14 to 16 V/m/s most preferred.

A network of unattended ground sensors like those described above may be provided, along with a base station. The base station comprises a receiver operable to receive the signals transmitted by the ground sensors. The network of ground sensors may be arranged with a spacing between adjacent ground sensors of no more than 30 m, no more than 20 m, no more than 15 m or no more than 10 m.

This arrangement provides a denser network of ground sensors. This may be advantageous where low cost sensors are being used. For example, each ground sensor may have a sensitivity in the range of 10 to 20 V/m/s, 12 to 18 V/m/s or 14 to 16 V/m/s. The network may comprise more than 25, 50, 100 or 250 ground sensors. This enables a less expensive network to be created with a greater number of low cost ground sensors. As well as reducing overall cost, this arrangement has a further benefit in providing a network with greater resolution due to the greater number of nodes. Moreover, better opportunities are provided in combining data produced from many more ground sensors, as will be described below.

The base station may further comprise a processor. The processor is operable to process the signals received by the receiver and to identify events corresponding to the movement of a pedestrian or vehicle across the ground recorded by the ground sensor that provided the signal being processed.

This arrangement sees responsibility for processing and analysing the seismic data pushed to the base station, and not imposed upon the ground sensors. This simplifies the requirements for the ground sensors, thus allowing their cost to be reduced. Essentially, data corresponding to the seismic signals is sent from the ground sensors to the base station, where a processor performs the analysis. It is to be understood that the ground sensors may perform some manipulation of the seismic data, for example to reduce noise, to amplify the signal, or to select frequency bands of interest. In any event, the signal transmitted by the ground sensor still corresponds to the seismic signal recorded by the seismic sensor. No analysis has been performed at the ground sensor in the sense that no attempt has been made to determine whether an event corresponding to the movement of a pedestrian or vehicle has occurred.

Thus, the processor at the base station collects seismic data from the ground sensors. The processor may be operable to analyse the received signals to characterise the pedestrian or vehicle detected. Preferably, the processor performs analysis of the seismic data from the ground sensors in a comparative sense, as well as analysing the data from each ground sensor in isolation. For example, the data received may be fused, as is well known in the art. Comparative analysis may be used to verify the detection of events and/or to reduce the instances of false detections. Comparative analysis may be used track a pedestrian or vehicle.

A method of manufacturing an unattended ground sensor may comprise installing into an outer body, a seismic sensor operable to detect seismic waves incident on the ground sensor and to generate seismic data therefrom, a transmitter operable to transmit wirelessly signals from the ground sensor, a controller operable to receive signals from the seismic sensor corresponding to the seismic data and to send signals to the transmitter for onward transmission, a power supply arranged to provide power to the ground sensor and a rotor operable to retard a rate of descent of the ground sensor during deployment.

The present invention also extends to a method of deploying an unattended ground sensor like those described above. The method comprises deploying the ground sensor from an aircraft such that the rotor freewheels thereby slowing the rate of descent of the ground sensor as it falls to the ground. The rotor may be allowed to rotate freely, or may be controlled through a braking force to limit the speed of rotation, e.g. using a gear mechanism. For example, the ground sensor may be deployed from a height of 50 - 250 metres above the ground, say around 100 metres above the ground. The ground sensors may be deployed from a helicopter. When deployed, the ground sensor may penetrate the ground upon impact.

### BRIEF DESCRIPTION OF THE DRAWINGS

In order that the present invention may be more readily understood, preferred embodiments will now be described, by way of example only, with reference to the following drawings in which:
Figure 1 is a schematic representation of an air-deployable unattended ground sensor according to an embodiment of the present invention;
Figure 2 is a schematic representation of an air-deployable unattended ground sensor according to another embodiment of the present invention;
Figure 3 is a perspective view of an air-deployable unattended ground sensor according to yet another embodiment of the present invention;
Figure 4 is a partial cut-away perspective view of the air-deployable unattended ground sensor of Figure 3;
Figure 5 is an exploded view of the air-deployable unattended ground sensor of Figure 3, showing the same partial cut-away perspective as Figure 4;
Figure 6 is a top view of the air-deployable unattended ground sensor of Figure 3;
Figure 7 is a side view of the air-deployable unattended ground sensor of Figure 3;
Figure 8 is a longitudinal section through the air-deployable unattended ground sensor of Figure 3 after deployment;
Figure 9 is a side view of an air-deployable unattended ground sensor according to a still further embodiment;
Figure 10 is a schematic representation of a network of air-deployable unattended ground sensors like those of Figures 1 to 9; and
Figure 11 is a schematic representation of another network of air-deployable unattended ground sensors like those of Figures 1 to 6.

### DETAILED DESCRIPTION OF THE INVENTION

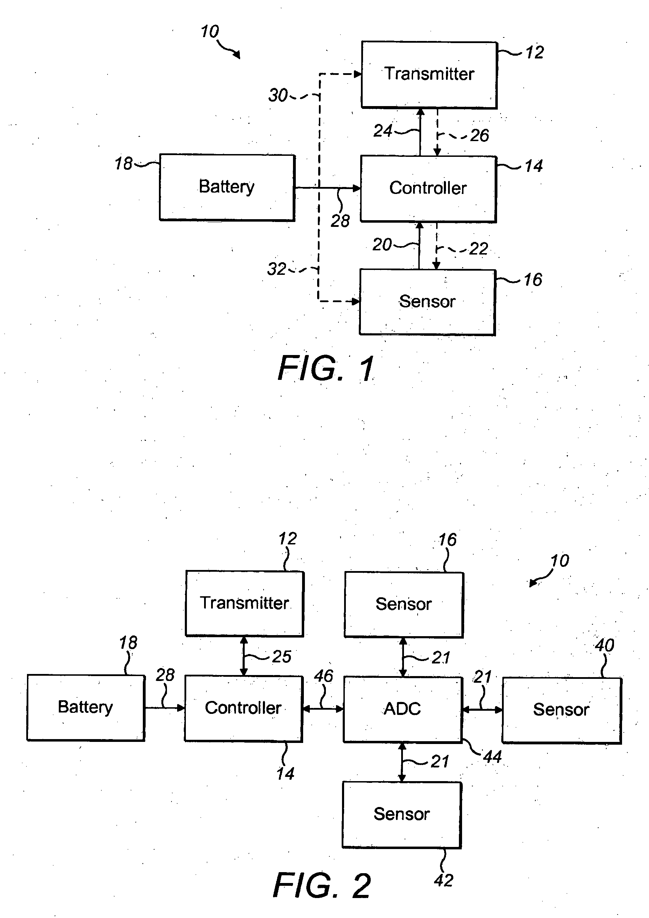

An air-deployable unattended ground sensor 10 is shown schematically in Figure 1 such that the main electrical components of the ground sensor 10 may be seen clearly. The ground sensor 10 comprises a transmitter 12, a controller 14 and a sensor 16. In this embodiment, sensor 16 is a seismic sensor 16 and may be a MEMS seismic sensor. The seismic sensor 16 detects vibrations transmitted to the ground sensor 10 when the ground sensor 10 is deployed in the field. The ground sensor 10 is deployed from the air. Preferably, the ground sensor 10 penetrates the ground upon impact, thereby improving detection of vibrations. However, the ground sensor 10 may not penetrate the ground and instead may come to rest on its side. Any movement across the ground close to the ground sensor 10 will cause vibrations to travel through the ground. These seismic vibration impinging on the ground sensor 10 will be detected by the seismic sensor 16, for example the vibrations may be reproduced as a voltage output of the seismic sensor 16. The ground sensor 10 is sensitive enough to detect the vibrations if either the ground sensor 10 has penetrated the ground or when laying on its side.

A battery 18 provides power to the ground sensor 10. The battery 18 may be switched on during deployment, as is explained in more detail below.

The controller 14 manages operation of the ground sensor 10. The controller 14 receives signals from the seismic sensor 16, as shown by arrow 20. The signals may correspond to the voltage output of the seismic sensor 16. In addition, controller 14 may send signals to the seismic sensor 16, as shown by arrow 22, for example to set the frequency with which the seismic sensor 16 collects data. The controller 16 processes the signal received from the seismic sensor 16. For example, the controller 16 may filter the signal to reduce noise, and/or may amplify the signal. The controller 14 may perform more sophisticated processing of the signal received from the seismic sensor 16, for example according to algorithms to discriminate between actual movements of people or vehicles as opposed to other ambient vibrations. However, in preferred embodiments, the ground sensor 10 is simple and a relatively unsophisticated controller 14 is used that provides just conditioning of the signal received from the seismic sensor 16.

The controller 14 passes signals to the transmitter 12, as shown by arrow 24, for onward transmission to a base station or the like. For example, the controller 24 may provide the signal from the seismic sensor 16, after conditioning, to the transmitter 12. The controller 14 may send signals whenever they are available for transmission, or may store data in memory such that batches of data may be sent periodically. The transmitter 12 may be a transceiver capable of receiving signals that are passed to the controller 14, as indicated by arrow 26. For example, diagnostic signals may be sent to the ground sensor 10 to elicit a response thereby indicating that the ground sensor 10 is functioning correctly.

The battery 18 provides power to the controller 14, as indicated by the arrow 28. The controller 14 may distribute power to the other components of the ground sensor 10 that require power, for example the transmitter 12 and/or the sensor 16. Alternatively, power may be supplied direct from the battery 18, as indicated by broken arrows 30 and 32. The battery 18 may be rechargeable, and may be recharged from a solar cell provided on the ground sensor 10. Other power sources may be used in place of the battery 18, for example a fuel cell.

The seismic sensor 16 may gather data continuously, or it may gather data periodically. How often the seismic sensor 16 gathers data may be set by the controller 14, and may vary. For example, the frequency may increase at certain times of day, or after receiving a signal indicating movement nearby. The seismic sensor 16 may gather data continuously, but the controller 14 may accept a signal from the seismic sensor 16 only when the signal varies above a threshold. This allows general background noise to be ignored, and data to be collected only when a larger amplitude signal arises that is more indicative of movement nearby.

Figure 2 shows an alternative embodiment of a ground sensor 10. This embodiment generally corresponds to the embodiment of Figure 1, and the optional features described above with respect to Figure 1 apply to the embodiment of Figure 2 also.

In the embodiment of Figure 2, the battery 18 supplies electricity directly to the controller 14. The controller 14 provides a regulated power supply to the remaining components of the ground sensor 10, as indicated by the double-headed arrows 21, 25 and 46. As noted above, the battery 18 may alternatively supply power directly to the other components of the ground sensor 10.

The transmitter 12 is a transceiver, although may be implemented to transmit alone.

The ground sensor 10 of Figure 2 is provide with three sensors 16, 40 and 42. A seismic sensor 16 like that of Figure 1 is included. In this embodiment, the ground sensor 10 further comprises a temperature sensor 40 and a magnetic field sensor 42. Either or both of these additional sensors 40,42 may be present in embodiments of the present invention. Temperature sensor 40 provides a signal that varies according to the ambient temperature, and the magnetic field sensor 40 provides a signal that varies with the sensed magnetic field. Variations in the temperature sensed and the magnetic field sensed may be indicative of a pedestrian or vehicle passing by the ground sensor 10.

In this embodiment, the seismic sensor 16, the temperature sensor 40 and the magnetic field sensor 42 produce analogue signals. These analogue signals are passed to an ADC (analogue to digital converter) as shown by the arrows labelled 21. ADC 44 is preferably a sixteen-bit ADC that digitises the signals provided by the three sensors 16, 40 and 42. The ADC 44 may provide further functionality, for example amplification and filtering. The ADC 44 provides the digitised signals from the three sensors 16, 40 and 42 to the controller 14, as shown by arrow 46. The signals may be passed in parallel or in series, for example after multiplexing. The controller 14 processes the digital signals received from the ADC 44, and sends the results to the transmitter 12 for onward transmission, as previously described.

Figures 1 and 2 show electrical components typically included in the air-deployable unattended ground sensor 10, although other electrical components may be included. For example, as will be described in greater detail below, the ground sensor 10 includes a rotor 101 that, in arrangements outside the scope of the present invention, may be powered by an electric motor. Thus, the ground sensor 10 may include an electric motor that receives power from the battery 18, either directly or via the controller 14.

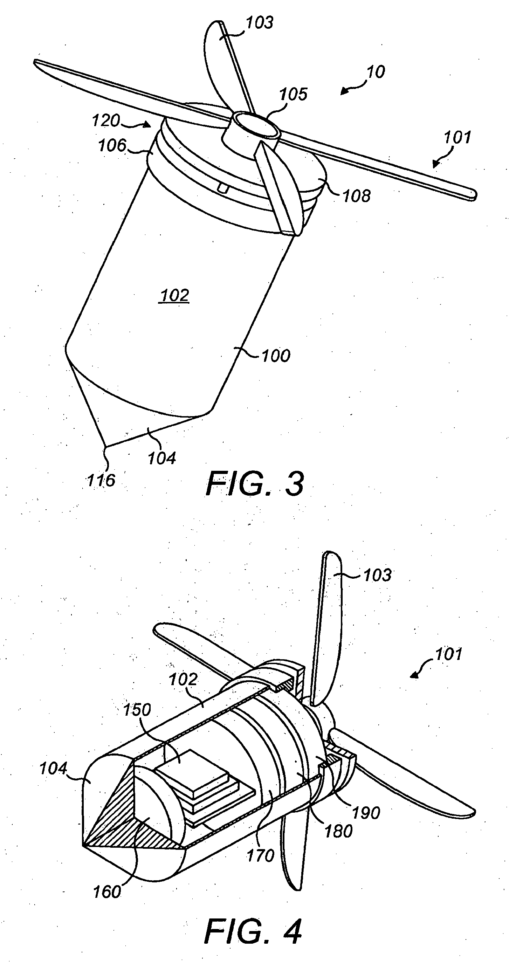

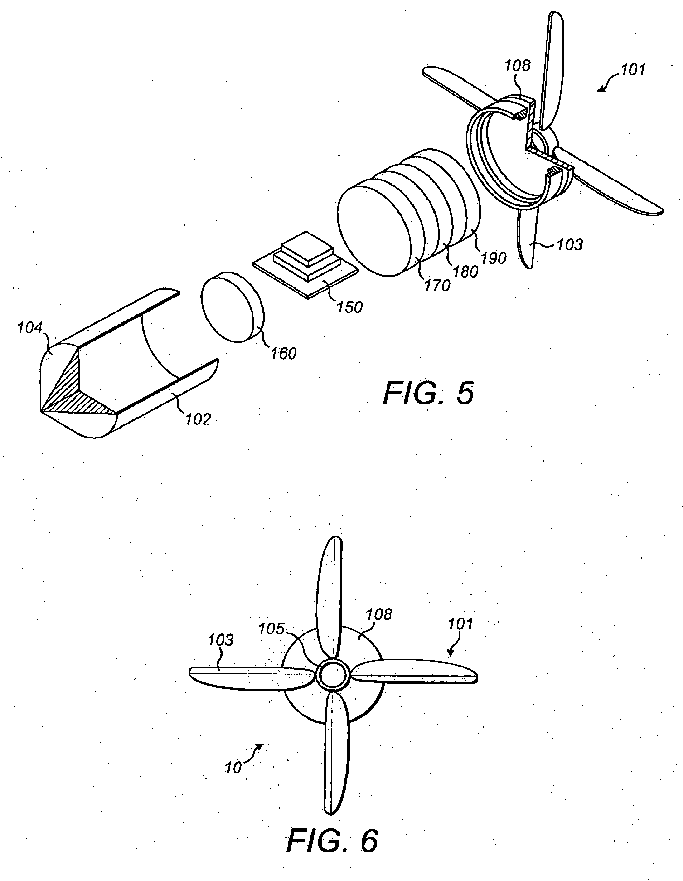

Figures 3 to 8 show another embodiment of an unattended ground sensor 10. The ground sensor 10 of Figures 3 to 8 may conform to the schematic representations of Figure 1 and 2, and to the accompanying description above.

As will be seen, the ground sensor 10 has a generally elongate body 100 comprising a generally cylindrical main section 102 that extends between a pointed base 104 and a collar 106. A rotor 101 is provided at the collar-end of the elongate body 100.

The rotor 101 comprises four blades 103 that extend from a central hub 105. The blades 103 have an aerodynamic shape that is optimised for performance as a freewheeling rotor 101. Such designs are well known in the art. The hub 105 is mounted on a shaft (not shown) that is aligned with the longitudinal axis of the ground sensor 10. The shaft is arranged so as to allow the rotor 101 to rotate freely. Thus, upon deployment from an aircraft, the rotor 101 will freewheel as it falls by virtue of the air rushing past the aerodynamic blades 103. This will cause the descent of the ground sensor 10 to be slowed, akin to an autorotation landing in a helicopter. In some contemplated embodiments, the rotor 101 is coupled to the shaft in a way that allows the rotational speed of the rotor 101 to be controlled, such as by using a gear mechanism optionally comprising small gears. For example, an upper rotational speed of the rotor 101 may be set in this way. This, in turn, allows the rate of descent of the ground sensor 10 to be limited to a minimum. Maintaining a minimum rate of descent assists in the ground sensor 10 penetrating the ground 200.

Rotation of the rotor 101 is used to activate the battery 18. For example, battery power is not required prior to deployment. In order to avoid running down the battery 18 prior to deployment, it may be set to be inactive. The battery 18 is then activated by rotation of the rotor 101 during deployment. To avoid the battery 18 being switched on too early, for example as a result of the rotor 101 being moved during general handling of the ground sensor 10, the battery 18 may be activated only when the rotor 101 rotates at a threshold speed. The threshold speed may be set to be a typical speed encountered only during deployment, for example 180 revolutions per minute.

In arrangements outside the scope of the present invention, the rotor 101 may be powered by a motor. Upon deployment, the motor is used to drive the rotor 101 to provide lift so as to control the rate of descent of the ground sensor 10.

The elongate body 100 is generally circular in cross-section. A cap 108 is supported above the collar 106 by four posts 110. The cap 108 is solid and provides protection for the components that are housed within the elongate body 100. An air passage 120 extends between the collar 106, cap 108 and posts 110 and communicates with an aperture 122 provided in the top of the collar 106 to allow air to pass into the interior of the elongate body 100.

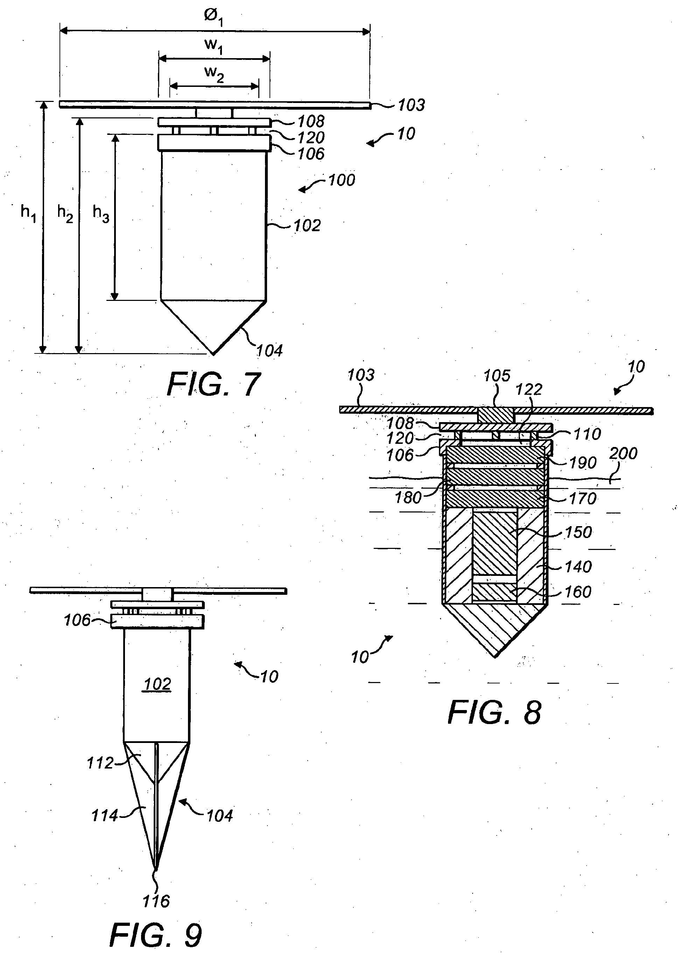

The pointed base 104 of the elongate body 100 is conical and terminates at a sharp point 116. The pointed base 104 is provided to aid penetration of the ground sensor 10 into the ground 200, as shown best in Figure 8. The rotor 101 ensures that the ground sensor 10 descends to the ground with the rotor 101 at the top and the pointed base 104 at the bottom. The ground sensor 10 strikes the ground 200 with enough force, for most ground types, for the pointed base 104 to penetrate the ground 200. To this end, the elongate body 100 is constructed so as to be robust and not to break under such repeated action. However, penetration of the ground sensor 10 into the ground 200 cannot be guaranteed, so the ground sensor 10 is designed to function where the ground sensor 10 strikes the ground 200 and then comes to rest on its side on top of the ground 200.

Where the ground sensor 10 succeeds in burying itself into the ground, the point 116 penetrates the ground 200 and the ground 200 is pushed aside to provide clearance for the main section 102 of the elongate body 100. To ensure the ground sensor 10 does not completely bury itself in the ground 200, the collar 106 is provided. Should the ground sensor 10 penetrate deeply, for example because the ground 200 is soft, the underside of the collar 106 will make contact with the top surface of the ground 200, as shown in Figure 8, and will bring the ground sensor 10 to a halt. As will be appreciated, by designing the ground sensor 10 to penetrate the ground 200, more of the ground sensor 10 resides within the ground 200 and so will the ground sensor 10 will be more sensitive to seismic vibrations travelling through the ground 200. Also, as less of the ground sensor 10 projects above the ground 200, the ground sensor 10 is well hidden and less likely to be discovered.

Figure 7 shows dimensions of this particular embodiment of the ground sensor 10. The ground sensor 10 has an overall height h₁ of 90 mm. The height h₂ of the ground sensor 10 excluding the rotor 101 is 84 mm, with the height h₅ of the air passage 120 being 5 mm. The main section 102 of the elongate body 100 has a height h₃ of 55 mm. The diameter φ₁ of the rotor 101 is 90 mm. The width w₁ of the elongate body 100 at its widest point (the cap 108 and collar 106) is 40 mm. The main section 102 of the elongate body 100 has a width w₂ of 35 mm.

The elongate body 100 is provided with a hollow centre that houses several components. In contemplated embodiments, the internal diameter of the hollow centre of the elongate body 100 varies in accordance with the components' sizes. However, it is preferred not to form the elongate body 100 in this way, but instead to form the hollow centre of the main section 102 with a constant internal diameter. A shaped sleeve 140 is then inserted into the hollow centre of the elongate body 100. The sleeve 140 has an outer diameter that matches the internal diameter of the elongate body 100 to ensure a snug fit. The internal diameter of the sleeve 140 varies to match the sizes of the components.

The elongate body 100 houses the components in a stack, one above the other. A battery 160 is provided at the bottom of the stack. The battery 160 is firmly supported by the sleeve 140. A 1.0 Ah battery wafer cell 160 has been found to produce a typical working life of 50 days. The battery wafer cell 160 may be switched on during deployment, as described above. The battery 160 may have any of the following properties: a rated voltage of 3.6 V, a maximum recommended continuous current of 10 mA, a maximum pulse current of 50 mA, and an operating range of -55°C to +85°C. Such batteries are commonly available.

Above the battery wafer cell 160, there is a MEMS seismic sensor 150. The seismic sensor 150 is firmly supported by the sleeve 140, and the snug fit of the sleeve 140 within the elongate body 100 ensures strong coupling of seismic waves from the ground 200 to the seismic sensor 150. The seismic sensor 150 is small, having a common length and width of 19.8 mm and a height of 15.0 mm. The seismic sensor 150 may be a Colibrys SF2005 seismic sensor available from www.colibrys.com or ACAL BFi (Spain), C/Anabel Segura, 7 Planta Acceso, 28108 Alcobendas Madrid, Spain. The seismic sensor 150 is preferably selected to have good sensitivity to seismic vibration irrespective of its orientation. This is to ensure the seismic sensor 150 functions well, no matter what orientation is adopted by the ground sensor 10 once deployed (i.e. whether it penetrates the ground 200 to come to rest vertically or at some arbitrary angle away from the vertical, or whether it comes to rest on its side where again the ground sensor 20 may adopt any arbitrary angle depending upon the local topography of the ground where it lays).

This seismic sensor 150 has a capacitive MEMS sensor with good seismic and vibration sensing when extreme low noise measurement is required. This seismic sensor 150 has a wide dynamic range, excellent bandwidth, low distortion and good thermal stability. Furthermore, the seismic sensor 150 also has excellent shock resistance of up to 1500g, making it well suited for air deployment.

Above the seismic sensor 150 there is a sensor board 170. The sensor board 170 provides the controller 14 and may also provide the ADC 44. The sensor board 170 may be any commonly available electronics circuit board, such as an application specific integrated circuit (ASIC) board. The functions that may be implemented by the sensor board 170 have been described above. The controller 14 may operate at 16 MIPS throughput up to 16 MHz. The sensor board 170 may also provide a magnetic field sensor 42, a temperature sensor 40 and associated circuits, when included in the ground sensor 10.

Above the sensor board 170, a radio board 180 is sandwiched between the controller board 170 and an antenna 190. The radio board 180 converts the signals provided by the controller 14 into a form suitable for radio transmission, and provides this as a driving signal to the antenna 190. A single board may be used to replace both the controller board 170 and the radio board 180. An Atmel ATmega128RFA1 is used that is a single component based on the combination of an ATmega1281 microcontroller and an AT86.F231 radio transceiver. The component is available from Atmel Corporation, 2325 Orchard Parkway, San Jose, CA 95131, USA. In this embodiment, the antenna 190 is a printed circuit board 3 dBi dipole antenna.

The electrical connections between the components are not shown in the Figures 3 to 6. Air passages, not shown in the figures, may be provided between the components to aid cooling.

The ground sensor 10 may be taken apart to allow components to be renewed, such as the battery 160. For example, the collar 106 may couple to the elongate body 100 via a screw thread. The collar 106 and cap 108 may then be unscrewed to allow access to the interior of the elongate body 100. Where a sleeve is provided, this may be slid out from the elongate body 100. The sleeve may be split longitudinally to allow access to the components.

Figure 9 shows another embodiment of a ground sensor 10 according to the present invention. The ground sensor 10 of Figure 9 broadly corresponds to those described above, but differs in the design of the pointed base 104. The pointed base 104 of the elongate body 100 comprises a conical part 112 and four ribs 114 that extend downwardly from the conical part 112 to meet at a sharp point 116. The pointed base 104 is provided to aid penetration of the ground sensor 10 into the ground 200. As the point 116 penetrates the ground 200, the ground 200 is pushed aside by the ribs 114 and the conical part 112 until a hole is formed in the ground 200 with sufficient size to provide clearance for the main section 102.

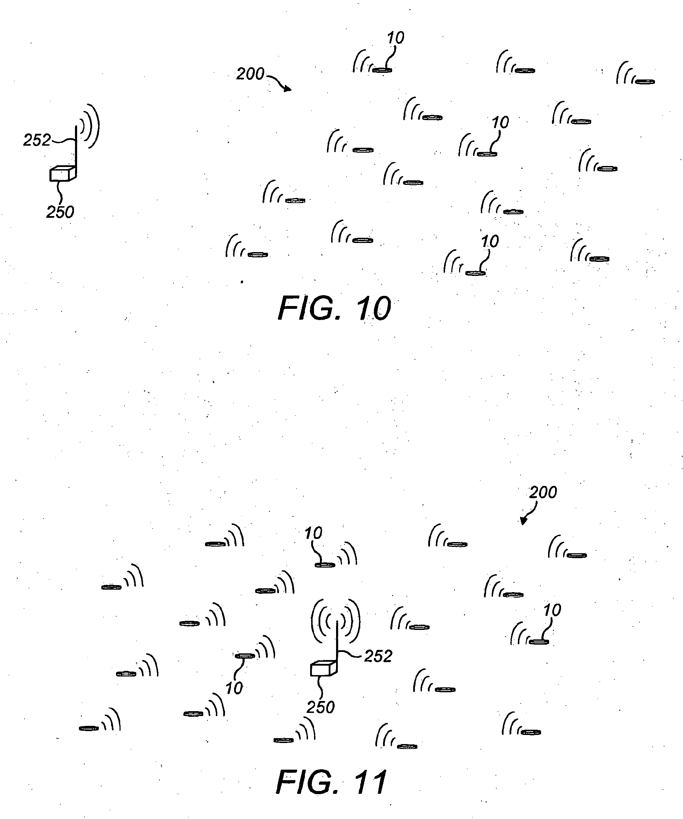

Figures 10 and 11 show networks 200 of unattended ground sensors 10. The individual ground sensors 10 may be like any of those described above. Each ground sensor 10 within the network 200 need not be the same. The ground sensors 10 are spread out to form an array. Although the figures show fifteen to twenty ground sensors 10 in a network 200, typically a network 200 would comprise a hundred or more ground sensors 10. The ground sensors communicate with a base station 250 provided with a transceiver 252. The base station 250 may be located remote from the network 200 of ground sensors 10, as shown in Figure 10. Alternatively, the base station 250 may be located within the network 200 of ground sensors 10, as shown in Figure 11.

The base station 250 receives signals from each of the ground sensors 10. The signals correspond to the data provided by the sensors 16, 40, 42 of the ground sensors 10.

As discussed above, it is preferred for the bulk of the data analysis to be performed centrally at the base station 250. Accordingly, each ground sensor 10 performs only minimal processing of data received from the sensors 16, 40, 42 before transmitting the data to the base station 250.

Processors are provided at the base station 250 to analyse the incoming data. The data from each ground sensor 10 are analysed to determine occurrences where a passing pedestrian or vehicle has been detected, as is well known in the art. Such an occurrence may cause an alarm to be generated. Further analysis may be able to characterise the occurrence, for example the movement of a pedestrian will provide a different signature to movement of a vehicle. Similarly, movement of heavy and light vehicles provide different signatures, as do wheeled vehicles compared to tracked vehicles.

Data from several sensors may be fused, for example to allow determination of the position of a moving object through triangulation, for example. Moreover, an object may be tracked, either merely by following the occurrences as they are detected by one ground sensor 10, followed by the next ground sensor 10, and so on, or by determining successive positions of the object using multiple ground sensors 10 as described above. Fusing data from multiple ground sensors 10 also allows more reliable detection of events, i.e. allows better discrimination of false alarms. The ability to fuse data is an inherent advantage of the network arrangement described herein where data processing is handled centrally at the base station 250 rather than pushing processing out to more sophisticated ground sensors 10.

The ground sensors 10 need not be precisely positioned within the network 200. This conforms with the desire to provide a simple network of sensors that may be rapidly deployed. Thus, operators may simply deploy the ground sensors 10 from the air and the inevitable inaccuracies as to where each sensor 10 will land can be tolerated.

It will be clear to the skilled person that variations may be made to the above embodiments without necessarily departing from the scope of the invention that is defined by the appended claims.

## Claims

1. An air-deployable unattended ground sensor (10) comprising:
a seismic sensor (16; 150) operable to detect seismic waves incident upon the ground sensor (10) and to generate seismic data therefrom;
a transmitter (12) operable to transmit wirelessly signals from the ground sensor (10);
a controller (14) operable to receive signals from the seismic sensor (16; 150) corresponding to the seismic data and to send signals to the transmitter (12) for onward transmission;
a power supply (18; 160) arranged to provide power to the ground sensor (10);
an outer body (100) within which the seismic sensor (16; 150), the controller (14) and the power supply (18; 160) are housed; and
a rotor (101) provided at one end of the outer body wherein the rotor (101) is capable of freewheeling;
**characterized in that**:
the air-deployable unattended ground sensor further comprises a switch; and
the power supply (18; 160) is arranged to provide power to the ground sensor (10) upon activation of the switch during said deployment wherein the switch is arranged to be activated by said rotation of the rotor (101).

2. The ground sensor (10) of claim 1, further comprising a braking mechanism to slow rotation of the rotor (101).

3. The ground sensor (10) of claim 2, wherein the braking mechanism is a gear mechanism coupled to the rotor (101).

4. The ground sensor (10) of any preceding claim, wherein the switch is arranged to be activated by rotation of the rotor (101) above a threshold rate of rotation.

5. The ground sensor (10) of any preceding claim wherein the outer body (100) is elongate and wherein the rotor (101) is provided at one end of the elongate outer body (100) and, optionally, the elongate outer body (100) tapers at the other end (104).

6. The ground sensor (10) of claim 5, wherein elongate outer body (100) tapers at its end (104) to a point (116), optionally with ribs (114) that extend and narrow to meet at a point (116).

7. The ground sensor (10) of claim 5 or claim 6, wherein the seismic sensor (16; 150), the controller (14), the power supply (18; 160) and the transmitter (12) are arranged in a stack, one above another, within the elongate outer body (100).

8. The ground sensor (10) of any preceding claim, wherein the elongate body (100) is provided with a collar (106) at the end of the ground sensor (10) adjacent the rotor (101), and optionally further comprising a top of the ground sensor (108) spaced from the collar (106) so as to form an air gap (120) to admit air into the interior of elongate outer body (100).

9. A network (200) comprising a plurality of unattended ground sensors (10) according to any preceding claim and a base station (250) comprising a receiver (252) operable to receive the signals corresponding to the seismic data transmitted by the ground sensors (10) and a processor operable to process the received signals corresponding to the seismic data and to identify events corresponding to the movement of a pedestrian or vehicle across the ground recorded by the ground sensor (10) that provided the signal being processed.

10. A method of deploying the ground sensor (10) of any preceding claim, comprising the step of deploying the ground sensor (10) from an aircraft such that the rotor (101). freewheels thereby slowing the rate of descent of the ground sensor (10) as it falls to the ground.

## Patentansprüche

1. Automatischer, aus der Luft verlegbarer Bodensensor (10), der aufweist:
einen seismischen Sensor (16; 150), der betrieben werden kann,
um auf den Bodensensor (10) treffende seismische Wellen zu erfassen und um daraus seismische Daten zu generieren,
einen Sender (12), der betrieben werden kann, um vom Bodensensor (10) drahtlos Signale zu übertragen,
eine Steuerung (14), die betrieben werden kann, um von dem seismischen Sensor (16, 150) den seismischen Daten entsprechende Signale zu empfangen und um die Signale an den Sender (12) zur weiteren Übertragung zu senden,
eine Energieversorgung (18, 160), die zur Energieversorgung des Bodensensors (10) ausgebildet ist,
ein Außengehäuse (100), worin der seismische Sensor (16, 150), die Steuerung (14) und die Energieversorgung (18, 160) aufgenommen sind, und
einen Rotor (101), der an einem Ende des Außengehäuses angeordnet ist, wobei der Rotor (101) im Freilauf betrieben werden kann,
**dadurch gekennzeichnet, dass**
der automatische, aus der Luft verlegbare Bodensensor ferner einen Schalter aufweist und
die Energieversorgung (18, 160) dazu ausgebildet ist, den Bodensensor (10) mit Energie zu versorgen, wenn der Schalter während eines Ausbringens aktiviert wird, wobei der Schalter zur Aktivierung durch Drehung des Rotors (101) ausgebildet ist.

2. Bodensensor (10) nach Anspruch 1, der ferner einen Bremsmechanismus zum Verlangsamen der Drehung des Rotors (101) aufweist.

3. Bodensensor (10) nach Anspruch 2, worin ein mit dem Rotor (101) verbundener Getriebemechanismus den Bremsmechanismus bildet.

4. Bodensensor (10) nach einem der vorhergehenden Ansprüche, worin der Schalter ausgebildet ist, durch eine Drehung des Rotors (101) aktiviert zu werden, die oberhalb einer Schwelldrehzahl liegt.

5. Bodensensor (10) nach einem der vorhergehenden Ansprüche, worin das Außengehäuse (100) länglich und der Rotor (101) an einem Ende des länglichen Außengehäuses (100) angeordnet ist, und wobei sich das längliche Außengehäuse (100) am anderen Ende (104) optional verjüngt.

6. Bodensensor (10) nach Anspruch 5, worin sich das längliche Außengehäuse (100) an seinem Ende (104) auf einen Punkt (116) verjüngt, optional mit Rippen (114), die sich so erstrecken und verjüngen, dass sie an einem Punkt (116) zusammentreffen.

7. Bodensensor (10) nach Anspruch 5 oder 6, worin der seismische Sensor (16, 150), die Steuerung (14), die Energieversorgung (18, 160) und der Sender (12) innerhalb des länglichen Außengehäuses (100) übereinandergestapelt angeordnet sind.

8. Bodensensor (10) nach einem der vorhergehenden Ansprüche, worin das längliche Gehäuse (100) an dem zum Rotor (101) benachbarten Ende des Bodensensors (10) mit einer Manschette (106) ausgestattet ist und optional ferner einen Bodensensordekkel (108) aufweist, der so in einem Abstand zur Manschette (106) angeordnet ist, dass ein Luftspalt (120) für einen Eintritt von Luft in das Innere des länglichen Außengehäuses (100) gebildet wird.

9. Netzwerk (200), das mehrere automatische Bodensensoren (10) nach einem der vorhergehenden Ansprüche und eine Basisstation (250) aufweist, die einen Empfänger (252), der zum Empfangen der den seismischen Daten entsprechenden Signale betrieben werden kann, die von dem Bodensensor (10) gesendet werden, und einen Prozessor aufweist, der betrieben werden kann, um die den seismischen Daten entsprechenden empfangenen Signale zu verarbeiten und um Vorgänge zu identifizieren, die einer Bewegung eines Fußgängers oder eines Fahrzeugs über den Boden entsprechen, die von dem Bodensensor (10) aufgezeichnet wurde, von dem das in der Verarbeitung befindliche Signal stammt.

10. Verfahren zum Verlegen eines Bodensensors (10) nach einem der vorhergehenden Ansprüche, wobei das Verfahren einen Schritt zum Ausbringen des Bodensensors (10) aus einem Luftfahrzeug mit freilaufendem Rotor (101) umfasst, sodass die Sinkgeschwindigkeit des Bodensensors (10) beim Zubodenfallen verlangsamt wird.

## Revendications

1. Capteur au sol automatique déployable par voie aérienne (10), comprenant :
un capteur sismique (16 ; 150) exploitable de manière à détecter des ondes sismiques incidentes sur le capteur au sol (10) et à générer des données sismiques à partir de celles-ci ;
un émetteur (12) exploitable de manière à transmettre par voie hertzienne des signaux à partir du capteur au sol (10) ;
un contrôleur (14) exploitable de manière à recevoir des signaux en provenance du capteur sismique (16 ; 150) correspondant aux données sismiques, et à envoyer des signaux à l'émetteur (12) en vue d'une transmission ultérieure ;
une alimentation électrique (18 ; 160) agencée de manière à fournir de l'énergie au capteur au sol (10) ;
un corps externe (100) dans lequel sont logés le capteur sismique (16 ; 150), le contrôleur (14) et l'alimentation électrique (18 ; 160) ; et
un rotor (101) délivré à une extrémité du corps externe, dans lequel le rotor (101) est apte à être en roue libre ;
**caractérisé en ce que** :
le capteur au sol automatique déployable par voie aérienne comprend en outre un commutateur ; et
l'alimentation électrique (18 ; 160) est agencée de manière à fournir de l'énergie au capteur au sol (10) lors de l'activation dudit commutateur au cours du déploiement, dans lequel ledit commutateur est agencé de manière à être activé par la rotation du rotor (101).

2. Capteur au sol (10) selon la revendication 1, comprenant en outre un mécanisme de freinage pour ralentir la rotation du rotor (101).

3. Capteur au sol (10) selon la revendication 2, dans lequel le mécanisme de freinage est un mécanisme d'engrenage couplé au rotor (101).

4. Capteur au sol (10) selon l'une quelconque des revendications précédentes, dans lequel le commutateur est agencé de manière à être activé par la rotation du rotor (101) au-dessus d'une vitesse de rotation de seuil.

5. Capteur au sol (10) selon l'une quelconque des revendications précédentes, dans lequel le corps externe (100) est oblong et dans lequel le rotor (101) est délivré à une extrémité du corps externe oblong (100) et, facultativement, le corps externe oblong (100) est effilé à l'autre extrémité (104).

6. Capteur au sol (10) selon la revendication 5, dans lequel le corps externe oblong (100) est effilé à son extrémité (104) jusqu'à un point (116), facultativement avec des nervures (114) qui s'étendent et se rétrécissent pour se rencontrer au niveau d'un point (116).

7. Capteur au sol (10) selon la revendication 5 ou 6, dans lequel le capteur sismique (16 ; 150), le contrôleur (14), l'alimentation électrique (18 ; 160) et l'émetteur (12) sont agencés dans un empilement, l'un au-dessus de l'autre, au sein du corps externe oblong (100).

8. Capteur au sol (10) selon l'une quelconque des revendications précédentes, dans lequel le corps oblong (100) est doté d'un collier (106) à l'extrémité du capteur au sol (10) adjacent au rotor (101), et comprenant facultativement en outre une partie supérieure du capteur au sol (108) espacée du collier (106) de manière à former un entrefer (120) pour admettre de l'air à l'intérieur du corps externe oblong (100).

9. Réseau (200) comprenant une pluralité de capteurs au sol automatiques (10) selon l'une quelconque des revendications précédentes, et une station de base (250) comprenant un récepteur (252) exploitable de manière à recevoir des signaux correspondant aux données sismiques transmises par les capteurs au sol (10) et un processeur exploitable de manière à traiter les signaux reçus correspondant aux données sismiques et à identifier des événements correspondant au mouvement d'un piéton ou d'un véhicule sur le sol, enregistrés par le capteur au sol (10) ayant fourni le signal traité.

10. Procédé de déploiement du capteur au sol (10) selon l'une quelconque des revendications précédentes, comprenant l'étape de déployer le capteur au sol (10) à partir d'un aéronef, de sorte que le rotor (101) entre en roue libre, ralentissant par conséquent le taux de descente du capteur au sol (10) à mesure qu'il chute vers le sol.
